Europäisches Patentamt

European Patent Office

Office européen des brevets

(19)

(11) Veröffentlichungsnummer: **0 283 720 B1**

(12)

# EUROPÄISCHE PATENTSCHRIFT

(45) Veröffentlichungstag der Patentschrift: **04.11.92**

(51) Int. Cl.⁵: $F16B\ 13/08$

(21) Anmeldenummer: **88102411.1**

(22) Anmeldetag: **19.02.88**

(54) **Befestigungselement bestehend aus einem Ankerbolzen und einem Klemmkeil.**

(30) Priorität: **21.03.87 DE 3709361**

(43) Veröffentlichungstag der Anmeldung:
**28.09.88 Patentblatt  88/39**

(45) Bekanntmachung des Hinweises auf die
Patenterteilung:
**04.11.92 Patentblatt  92/45**

(84) Benannte Vertragsstaaten:
**AT BE CH DE FR GB LI**

(56) Entgegenhaltungen:
**DE-A- 2 829 158**
**DE-A- 2 905 337**

(73) Patentinhaber: **"TOGE-DÜBEL" A. Gerhard
GmbH
Illesheimer Strasse 10
W-8500 Nürnberg 80(DE)**

(72) Erfinder: **Gerhard, Anton
Illesheimer Strasse 10
W-8500 Nürnberg 80(DE)**

(74) Vertreter: **Rau, Manfred, Dr. Dipl.-Ing. et al
Rau & Schneck, Patentanwälte Königstrasse
2
W-8500 Nürnberg 1(DE)**

## Beschreibung

Die Erfindung betrifft ein Befestigungselement nach dem Oberbegriff des Anspruches 1.

Bei einem derartigen aus der DE-A-28 29 158 bekannten Befestigungselement ist der Flansch nicht geschlossen, also ringförmig, ausgebildet, sondern umgreift die Außenfläche des Klemmkeils nur über einen verhältnismäßig kurzen Bereich. Hierbei ist keine ausreichende Transportsicherung, d.h. ein ausreichend fester axialer Verbund von Ankerbolzen und Klemmkeil in ungespreiztem Zustand gegeben. Auch beim Einschieben des Befestigungselementes in ein Bohrloch, was in der Praxis üblicherweise bei knapp gebohrten Löchern mit leichten Hammerschlägen erfolgt, besteht die Gefahr, daß bereits ein Spreizen, d.h. eine Relativverschiebung des Klemmkeils gegenüber dem Ankerbolzen erfolgt, bevor der Ankerbolzen mit seinem Flansch an dem zu befestigenden Teil anliegt. Um diesen Problemen zu begegnen, sind die Enden des den Klemmkeil klauenartig umgreifenden Flansches mit dem Klemmkeil durch Kleben, Schweißen, Löten od.dgl. verbunden, so daß eine feste Verbindung besteht, die aber durch Hammerschläge od.dgl. gelöst werden kann. Dies ist eine herstellungstechnisch aufwendige Lösung, die darüber hinaus eine einwandfreie Führung des Klemmkeils nach dem Brechen der Klebe-Schweiß- oder Lötverbindung nicht gewährleistet. Alternativ hierzu ist vorgesehen, am Klemmkeil Vertiefungen auszubilden, in welche die Flanken der Ausnehmung des klauenartigen Flansches, d.h. die inneren freien Enden dieses Flansches eingreifen. Beim Eintreiben des Klemmkeils in Richtung des Ankerbolzens, d.h. nach dem Lösen dieser Rastverbindung, liegen die freien Enden des Flansches an den von diesen überdeckten Teilflächen des Klemmkeils besonders stramm unter großer Reibung an.

Bei einer tatsächlichen Ausführungsform des bekannten Befestigungselementes ist der Flansch zu einem Ring geschlossen. Wenn die Durchgangs-Aussparung in dem Flansch in ihrem Querschnitt dem Querschnitt des Klemmkeils entspricht, und in ihren Abmaßen derart ist, daß in ungespreiztem Zustand der Klemmkeil durch Reibschluß so festgehalten wird, daß eine Transport- und Einschub-Sicherung gegeben ist, dann treten beim Einschlagen des Klemmkeils nach dem Einschieben des Befestigungselementes in ein Bohrloch zu große Reibungskräfte zwischen dem Klemmkeil und dem Ankerbolzen bzw. seinem Flansch auf, da der Klemmkeil beim Spreizen relativ zum Ankerbolzen radial nach außen bewegt wird, da die Spreizfläche des Klemmkeils über die Keilfläche des Ankerbolzens geschoben wird. Um diesem Problem zu begegnen, ist der Flansch mit einem Blechmantel umgeben, der über die Aussparung des Flansches radial nach innen vorstehend Stege hat. Der Klemmkeil ist in diesem Bereich mit Ausnehmungen in seiner Außenfläche versehen, an die sich Bereiche unveränderten Querschnitts anschließen. Der in ungespreiztem Zustand über den Flansch nach hinten vorstehende Bereich des Klemmkeils ist zur Mittel-Längs-Achse des Befestigungselements hin gekröpft. Wenn der Klemmkeil zum Spreizen des Befestigungselementes eingeschlagen wird, dann drückt der gekröpfte Abschnitt den Klemmkeil im Bereich des Flansches radial vom Ankerbolzen weg, wodurch die sich an die Ausnehmung anschließenden Abschnitte des Klemmkeils die radial nach innen vorstehenden Abschnitte des Blechmantels abscheren bzw. wegdrücken. Da sich der gekröpfte Abschnitt zu seinem hinteren Ende hin relativ stark verjüngt, kommt dieser Bereich des Klemmkeils nach Beginn des Einschlagens nicht mehr oder nicht mehr sehr ausgeprägt mit dem Flansch in Berührung. Abgesehen von dem fertigungstechnischen Aufwand ist hierbei problematisch, daß die Gefahr besteht, daß bei einem nicht sehr sorgfältigen Einschlagen des Klemmkeils der gekröpfte Abschnitt krummgeschlagen wird bzw. abbricht. Dies hat in jedem Fall ein nicht ordnungsgemäßes Spreizen zur Folge.

Aus der DE-A1-29 05 337 ist ein ähnliches Befestigungselement bekannt, bei dem der Ankerbolzen mit einem Kopf versehen ist, der einen hutähnlichen Ring trägt, welcher wiederum mit einer Führungshülse für den Klemmkeil versehen ist. Beim Eintreiben des Klemmkeils wird dieser in dem hutförmigen Ring geführt, wobei die Reibungskräfte zwischen der Außenfläche des Klemmkeils und der Innenfläche des Rings mit zunehmendem Eintreiben des Klemmkeils größer werden, da der Klemmkeil beim Gleiten seiner Spreizfläche über die Keilfläche des Ankerbolzens vom Ankerbolzen abhebt. Selbst wenn aufgrund von Toleranzen in vormontiertem Zustand der Klemmkeil nur lose oder gar nicht mit dem Ankerbolzen verbunden ist, treten beim Einschlagen des Klemmkeils erhebliche Widerstandskräfte auf.

Der Erfindung liegt die Aufgabe zugrunde, ein Befestigungselement der gattungsgemäßen Art so auszugestalten, daß bei einfachem Aufbau und einfacher Herstellbarkeit und bei Beibehaltung einer guten Transport- und Einschub-Sicherung ein zuverlässiges Spreizen mit möglichst geringem Kraftaufwand gewährleistet ist.

Diese Aufgabe wird erfindungsgemäß durch die Merkmale im Kennzeichnungsteil des Anspruches 1 gelöst.

Durch die erfindungsgemäßen Maßnahmen wird sichergestellt, daß beim Transport und beim Einschub, gegebenenfalls auch unter leichten Hammerschlägen, der Klemmkeil fest zwischen dem Flansch und der entsprechenden Fläche des Ankerbolzens durch Reibschluß gehalten ist. Wenn die Vorsprünge unmittelbar nach Beginn des Einschlagens des Klemmkeils außer Eingriff mit dem Flansch sind, hat der Klemmkeil gegenüber dem Flansch ausreichend Spiel, so daß hier keine nennenswerten, ein Einschlagen behindernden Reibungskräfte auftreten, die unter entsprechender Beeinträchtigung der zu befestigenden Last auf diese übertragen würden. Der Klemmkeil ist in sich völlig geradlinig ausgebildet, so daß keine Gefahr besteht, daß er beim Einschlagen in seinem hinteren Bereich krumm wird ober abbricht.

Bei der Weiterbildung nach Anspruch 2 ist eine besonders feste Verbindung von Ankerbolzen und Klemmkeil in ungespreiztem Zustand erreicht. Das besonders problemlose Einschlagen wird durch die Maßnahmen nach Anspruch 3 besonders unterstützt. Durch die Ausgestaltung nach Anspruch 4 wird erreicht, daß die Vorsprünge in besonders einfacher Weise hergestellt werden können; sie können nämlich von der Anlagefläche her aus dem Material des Klemmkeils aus dessen Außenfläche herausgedrückt werden. Insoweit ist es nach Anspruch 5 besonders vorteilhaft, nur diese beiden Vorsprünge vorzusehen. Grundsätzlich ist es nach Anspruch 6 vorteilhaft, die Vorsprünge spiegelsymmetrisch zueinander an der Außenfläche des Klemmkeils auszubilden.

Weitere Vorteile und Merkmale der Erfindung ergeben sich aus der Beschreibung eines Ausführungsbeispiels anhand der Zeichnung. Es zeigt

Fig. 1  ein Befestigungselement in ungespreiztem Zustand in Längs-Seiten-Ansicht entsprechend dem Sichtpfeil I in Fig. 2,

Fig. 2  das Befestigungselement nach Fig. 1 in Längs-Drauf-Ansicht entsprechend dem Sichtpfeil II in Fig. 1,

Fig. 3  einen Schnitt durch das Befestigungselement entsprechend den Schnittlinien III-III in den Fig. 1 und 2,

Fig. 4  eine Längs-Seiten-Ansicht eines Klemmkeils,

Fig. 5  einen Querschnitt durch den Klemmkeil gemäß der Schnittlinie V-V in Fig. 4 und

Fig. 6  eine Längs-Seiten-Ansicht eines Befestigungselements in gespreiztem Zustand.

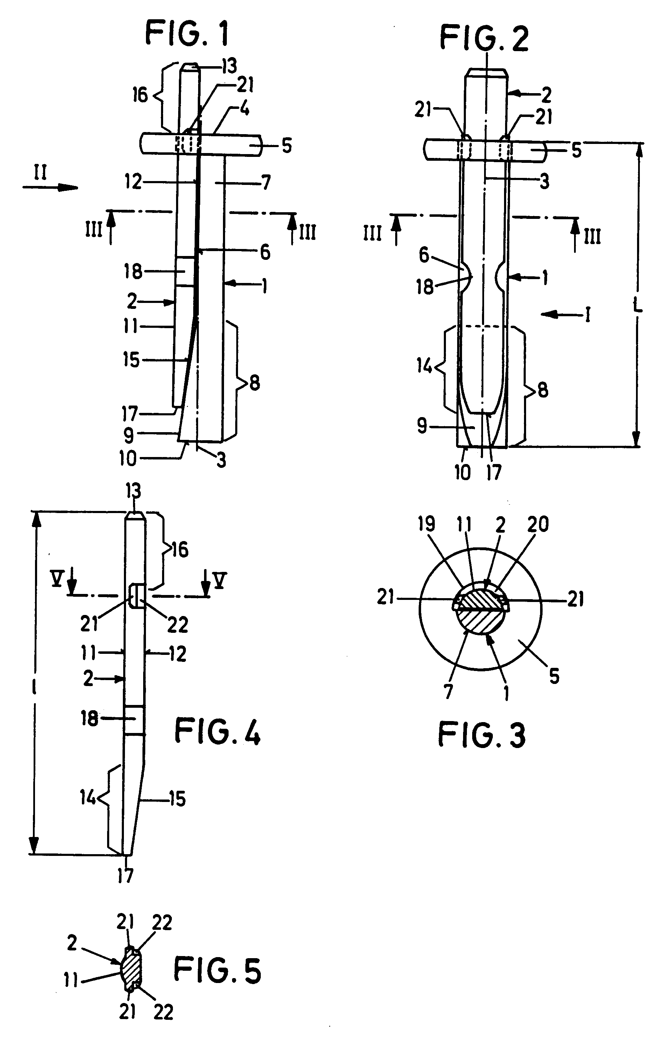

Das in der Zeichnung dargestellte Befestigungselement weist einen Ankerbolzen 1 und einen Klemmkeil 2 auf. Der Ankerbolzen 1 besteht in seinem Grundaufbau aus einem massiven Teil-Kreis-Zylinder mit einer Mittel-Längs-Achse 3, die der Einfachheit halber auch als Mittel-Längs-Achse 3 des gesamten Befestigungselementes bezeichnet wird. Der Ankerbolzen 1 weist an seinem hinteren Ende 4 einen ringförmigen, radial deutlich nach außen vorstehenden Flansch 5 auf, der einstückig mit dem Ankerbolzen 1, beispielsweise durch entsprechende Verformung, ausgebildet ist. Vom hinteren Ende 4 des Ankerbolzens 1 verläuft über etwa die Hälfte bis zwei Drittel seiner Gesamtlänge L eine Fläche 6 parallel zur Achse 3, und zwar in deren Nähe, so daß sich die Zylinderfläche 7 des Ankerbolzens 1 in diesem Bereich nur über etwa 190 bis 200° Umfangswinkel erstreckt. Im vorderen Bereich 8 des Ankerbolzens 1 erstreckt sich - ausgehend von der Fläche 6 - eine Keilfläche 9, die also vom vorderen Ende 10 des Ankerbolzens 1 zur Achse 3 hin geneigt ist. Am vorderen Ende 10 nähert sich der Querschnitt des Ankerbolzens wieder einem - allerdings noch nicht vollständigen - Kreisprofil, wie Fig. 2 zu entnehmen ist. Die Keilfläche 9 und die Fläche 6 sind eben, müssen dies aber nicht sein.

Der Klemmkeil 2 wird ebenfalls durch einen Teil-Kreis-Zylinder gebildet, wie aus den Fig. 3 und 4 hervorgeht. Der Durchmesser seines zugeordneten Zylinders ist aber geringfügig kleiner als der des Ankerbolzens 1, wie sich aus Fig. 2 und 3 ergibt. Seine Außenfläche 11 ist also ebenfalls eine Teil-Zylinder-Fläche, deren Mantellinien also - gleichermaßen wie bei der durch die Zylinderfläche 7 gebildeten Außenfläche des Ankerbolzens 1 - parallel zueinander verlaufen. Der Klemmkeil 2 weist eine Anlagefläche 12 auf, die der Fläche 6 des Ankerbolzens 1 angepaßt ist. Diese Anlagefläche 12 erstreckt sich vom hinteren Ende des Klemmkeils 2 in ungespreiztem Zustand des Befestigungselementes bis zum Übergang von der Fläche 6 in die Keilfläche 9 des Ankerbolzens 1. Im vorderen Bereich des Klemmkeils 2 schließt sich an die Anlagefläche 12 eine Spreizfläche 15 an, die in ungespreiztem Zustand des Befestigungselementes zumindest teilweise an der Keilfläche 9 des Ankerbolzens 1 anliegt. Wie aus den Fig. 1 und 2 ersichtlich ist, steht das hintere Ende 13 des Klemmkeils 2 in ungespreiztem Zustand des Befestigungselementes nach hinten um einen maximalen Einschlagbereich 16 über den Flansch 5 vor. Das vordere Ende 17 des Klemmkeils 2 liegt hierbei hinter dem vorderen Ende 10 des Ankerbolzens 1; die Länge l des Klemmkeils 2 ist aber etwas größer als die Gesamtlänge L des Ankerbolzens 1. Aus dem Vorstehenden ergibt sich auch, daß die Länge der Spreizfläche 15 kleiner ist als die Länge der Keilfläche 9 jeweils in Richtung der Achse 3, während die Länge der Anlagefläche 12 deutlich größer ist als die Länge der Fläche 6, auch hier jeweils in Richtung der Achse 3 gesehen.

Der Klemmkeil 2 hat in dem Abschnitt vor der Spreizfläche 15 eine Stauchzone 18, wie sie aus der DE-PS 29 05 337 bekannt ist.

Der Flansch 5 weist eine Durchgangs-Aussparung 19 für den Klemmkeil 2 auf. Diese Aussparung 19 weist gleichermaßen wie der Klemmkeil 2 einen Teil-Kreis-Querschnitt auf, dessen Radius aber etwas größer ist als der des Klemmkeils 2, so daß dessen Außenfläche 11 ein Spiel 20 von 0,2 bis 0,4 mm zur Aussparung 19 hat, wie aus Fig. 3 erkennbar ist. Der Klemmkeil 2 weist in dem in ungespreiztem Zustand des Befestigungselements innerhalb des Flansches 5 befindlichen Bereich zwei Vorsprünge 21 auf, die von der Anlagefläche 12 her ausgeformt sind, wodurch zwischen diesen Vorsprüngen 21 und der Anlagefläche 12 kleine Ausnehmungen 22 gebildet sind. Diese Vorsprünge haben in Richtung der Achse 3 eine etwas größere Länge als der Dicke des Flansches 5 entspricht. In unmontiertem Zustand des Klemmkeils 2 haben diese Vorsprünge 21 ein geringes Übermaß gegenüber der Querschnittsumrandung der Aussparung 19, so daß sie beim Einführen des Klemmkeils 2 vom hinteren Ende 4 des Ankerbolzens 1 in die Aussparung 19 geringfügig verformt werden, wodurch der Klemmkeil 2 sehr fest mit dem Ankerbolzen 1 in Achsrichtung verbunden wird. Wie aus Fig. 3 ersichtlich ist, liegen die Vorsprünge 21 aber nur gegen einen kleinen Bereich der Aussparung 19 an, während der größte Teil der Außenfläche 11 des Klemmkeils 2 gegenüber der Aussparung 19 freiliegt. Insofern ist die erwähnte Verformung der Vorsprünge 21 beim Eindrücken des Klemmkeils 2 in den Flansch 5 des Ankerbolzens 1 auch bei deutlichen Toleranzen in den Abmaßen von Ankerbolzen 1 mit Flansch 5 einerseits und Klemmkeil 2 mit Vorsprüngen 21 andererseits möglich.

Die Montage eines solchen Befestigungselementes geht wie folgt vonstatten, wobei darauf hingewiesen sei, daß derartige Befestigungselemente bevorzugt als sogenannte Deckennägel, also zum Befestigen von Lasten an Beton-Decken, eingesetzt werden.

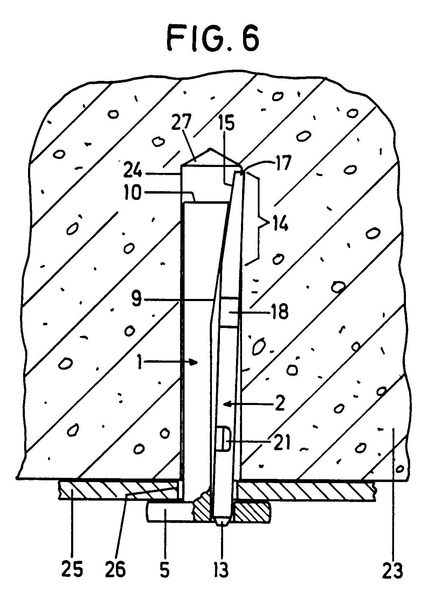

In eine Decke 23 wird eine Bohrung 24 eingebracht, deren Durchmesser geringfügig größer ist als der Durchmesser des Ankerbolzens 1. Anschließend wird ein zu befestigendes Teil 25, das ein der Bohrung 24 entsprechendes Loch 26 aufweist, das gegebenenfalls gleichzeitig mit der Bohrung 24 gebohrt wird, so gegen die Decke 23 gebracht, daß Loch 26 und Bohrung 24 sich überdecken. Dann wird das in den Fig. 1 bis 3 dargestellte ungespreizte Befestigungselement durch das Loch 26 in die Bohrung 24 eingeschoben, wobei das vordere Ende 10 des Ankerbolzens 1 zuerst eingeführt wird. Das Einschieben wird beendet, wenn mittels des Flansches 5 das Teil 25 gegen die Decke 23 gedrückt ist. Dann wird durch Hammerschläge auf das hintere Ende 13 des Klemmkeils 2 dieser in die Bohrung 24 eingetrieben, ohne daß die Lage des Ankerbolzens 1 in Richtung der Achse 3 sich nennenswert ändert. Durch die Verschiebung der Spreizfläche 15 auf der Keilfläche 9 wird zumindest der vordere Bereich 14 des Klemmkeils 2 radial zum Ankerbolzen 1 verschoben, wodurch der Gesamtquerschnitt des Befestigungselementes sich in seinem vorderen Bereich vergrößert. Durch dieses Spreizen erfolgt eine Verkeilung von Ankerbolzen 1 und Klemmkeil 2 im Bohrloch 24. Je nach Härte des Materials der Decke 23 und nach Übermaß des Bohrlochs 24 gegenüber dem Befestigungselement wird der Klemmkeil 2 unterschiedlich tief eingetrieben. Da er in seinem vorderen Bereich 14 und insbesondere an seinem vorderen Ende 17 sehr schlank ist, und da normalerweise das vordere Ende 10 des Ankerbolzens 1 nicht bis zum Bohrlochgrund 27 reicht, kann in der Regel der Klemmkeil 2 so weit eingetrieben werden, bis sein hinteres Ende 13 bündig mit dem Flansch 5 liegt, wie es in Fig. 6 dargestellt ist.

Da die Vorsprünge 21 sich in den beiden Übergangsbereichen zwischen Anlagefläche 12 und Außenfläche 11 befinden, kommt die zwischen den Vorsprüngen 21 befindliche Außenfläche 11 des Klemmkeils 2 auch bereits zu Beginn des Spreizvorganges nicht in Berührung mit dem Flansch 5 im Bereich der Aussparung 19, da das Spiel 20 größer ist, als das Abheben des Klemmkeils 2 im Bereich des Flansches 5 aufgrund der Verschiebung der Spreizfläche 15 auf der Keilfläche 9. Wenn das Eintreiben des Klemmkeils 2 zu etwa einem Drittel erfolgt ist, kommen die Vorsprünge 21 ohnehin außer Eingriff mit dem Flansch 5, so daß hier insgesamt die Außenfläche 11 des Klemmkeils 2 nicht mehr mit dem Flansch 5 in Berührung kommt. Der Klemmkeil 2 kann sich vielmehr selber seinen Weg in der Bohrung 24 suchen, und zwar entsprechend deren Verlauf und entsprechend lokalen Unterschieden in der Härte des Materials der Decke 23. Anstelle der Decke 23 kann ein solches Befestigungselement selbstverständlich auch in Wänden aus Beton oder hartem Mauerwerk verwendet werden.

Da die Länge l des Klemmkeils 2 größer ist als die Länge L des Ankerbolzens 1, dringt ein Teil des vorderen Bereichs 14 des Klemmkeils 2 über das vordere Ende 10 des Ankerbolzens 1 hinaus in das Bohrloch 24 ein. Es drückt sich hierbei seitlich in die Decke 23, so daß ein Formschluß zwischen dem Befestigungselement insgesamt und der Decke erreicht wird, da die Bohrung über ihre zylindrische Form hinaus aufgeweitet wird. Dies macht ein Ausziehen des Befestigungselementes im Rahmen der Festigkeit des Materials der Decke oder des Mauerwerks unmöglich. Dies gilt selbst dann, wenn der dem vorderen Ende 17 zugeordnete Teil des Klemmkeils 2, der sich über das vordere Ende 10 des Ankerbolzens 1 hinaus erstreckt, wieder leicht nach innen gebogen wird, so daß das vordere Ende 17 etwa wieder mit der Wand der Bohrung 24 fluchtet. Im Bereich des vorderen Endes 10 des Ankerbolzens 1 wird auf jeden Fall der entsprechende Bereich des Klemmkeils 2 in die Decke 23 eingedrückt. Dieser nur auf die größere Länge l des Klemmkeils 2 im Vergleich zur Länge L des Ankerbolzens 1 zurückzuführende Effekt ist im Prinzip unabhängig von der Ausgestaltung des Klemmkeils 2 mit den Vorsprüngen 21. Es gilt hierbei die Beziehung: $1{,}1 \leq l/L \leq 1{,}3$.

**Patentansprüche**

1. Befestigungselement, bestehend aus einem Ankerbolzen (1) und einem Klemmkeil (2), wobei am hinteren Ende (4) des Ankerbolzens (1) ein Flansch (5) mit einer Durchgangs-Aussparung (19) für den Klemmkeil (2) vorgesehen ist, wobei der Ankerbolzen (1) in seinem vorderen Bereich (8) mit einer Keilfläche (9) versehen ist, die von seinem vorderen Ende (10) in Richtung zum hinteren Ende (4) zur Mittel-Längs-Achse (3) des Ankerbolzens (1) hin geneigt ist, wobei sich an diese Keilfläche (9) eine sich im wesentlichen parallel zur Mittel-Längs-Achse (3) erstreckende, bis zum hinteren Ende (4) verlaufende Fläche (6) anschließt, und wobei der Klemmkeil (2) in ungespreiztem Zustand den Ankerbolzen (1) zu einem etwa zylindrischen Profil ergänzt und hierzu mit einer Anlagefläche (12) an der achsparallelen Fläche (6) und mit einer Spreizfläche (15) an der Keilfläche (9) anliegt, wobei sich das vordere Ende (17) des Klemmkeils (2) nicht bis zum vorderen Ende (10) des Ankerbolzens (1) erstreckt und das hintere Ende (13) des Klemmkeils (2) über den Flansch (5) hinausragt, wobei der Klemmkeil (2) in ungespreiztem Zustand in der Aussparung (19) des Flansches (5) mit Reibschluß gehalten ist, dadurch gekennzeichnet, daß der Klemmkeil (2) auf seiner Außenfläche (11) mit über diese hinausragenden Vorsprüngen (21) versehen ist, die in ungespreiztem Zustand fest gegen die Aussparung (19) des Flansches (5) anliegen, und daß ansonsten die Außenfläche (11) des Klemmkeils (2) Spiel (20) gegenüber der Aussparung (19) aufweist.

2. Befestigungselement nach Anspruch 1, dadurch gekennzeichnet, daß der Klemmkeil (2) in nicht mit dem Ankerbolzen (1) verbundenem Zustand im Bereich der Vorsprünge (21) geringes Übermaß gegenüber der Aussparung (19) aufweist.

3. Befestigungselement nach Anspruch 1, dadurch gekennzeichnet, daß die Mantellinien der Außenfläche (11) des Klemmkeils (2) parallel zueinander verlaufen.

4. Befestigungselement nach Anspruch 1, dadurch gekennzeichnet, daß mindestens zwei Vorsprünge (21) in den Übergangsbereichen zwischen der Anlagefläche (12) und der Außenfläche (11) des Klemmkeils (2) vorgesehen sind.

5. Befestigungselement nach Anspruch 1, dadurch gekennzeichnet, daß nur zwei Vorsprünge (21) vorgesehen sind.

6. Befestigungselement nach Anspruch 1, dadurch gekennzeichnet, daß der Klemmkeil (2) spiegelsymmetrisch zu einer senkrecht zur Anlagefläche (12) und durch die Mittel-Längs-Achse (3) verlaufenden Symmetrieebene ausgebildet ist und daß die Vorsprünge (21) symmetrisch zu dieser Symmetrieebene angeordnet sind.

7. Befestigungselement nach Anspruch 1, dadurch gekennzeichnet, daß die Vorsprünge (21) unter Bildung von benachbarten Ausnehmungen (22) aus dem Klemmkeil (2) herausgepreßt sind.

8. Befestigungselement, nach einem der Ansprüche 1 bis 7, dadurch gekennzeichnet, daß für das Verhältnis der Länge (l) des Klemmkeils (2) zur Länge (L) des Ankerbolzens (1) gilt $1{,}1 \leq l/L \leq 1{,}3$.

9. Befestigungselement nach einem der Ansprüche 1 bis 8, dadurch gekennzeichnet, daß das Spiel (20) einen Spalt zwischen der Außenfläche (11) des Klemmkeils (2) und der Aussparung (19) des Flansches (5) bildet, dessen Breite größer ist als das Abheben des Klemmkeils (2) im Bereich des Flansches (5) aufgrund der Verschiebung der Spreizfläche (15) auf der Keilfläche (9).

10. Befestigungselement nach Anspruch 9, dadurch gekennzeichnet, daß der Spalt eine Breite von 0,2 bis 0,4 mm aufweist.

11. Befestigungselement nach einem der Ansprüche 1 bis 10, dadurch gekennzeichnet, daß die Vorsprünge (21) in Richtung der Mittel-Längs-Achse (3) eine etwas größere Länge haben, als der Dicke des Flansches (5) entspricht.

12. Befestigungselement nach einem der Ansprüche 1 bis 11, dadurch gekennzeichnet, daß die Vorsprünge (21) in unmontiertem Zustand des Klemmkeils (2) ein geringes Übermaß gegenüber der Querschnittsumrandung der Aussparung (19) aufweisen und daß sie in montiertem Zustand geringfügig verformt sind.

**Claims**

1. Fastening element consisting of a tie bolt (1) and a clamping wedge (2) with a flange (5) with an open passage (19) for the clamping wedge (2) provided in the rear end (4) of the tie bolt (1), the tie bolt (1) being provided in its frontal area (8) with a wedge face (9) which is inclined from its front end (10) to its rear end (4) in the direction of the central longitudinal axis (3) of the tie bolt (1), where an adjoining face (6) extends generally parallel to the central longitudinal axis (3) and reaches as far as the rear end (4), where the clamping wedge (2), in its non-extended state, complements the tie bolt (1) to form an approximately cylindrical shape abutting with a contact face (12) on the axis-parallel face (6) and with an expansion face (15) on the wedge face (9), and where the front end (17) of the clamping wedge (2) does not extend to the front end (10) of the tie bolt (1) and the rear end (13) of the clamping wedge (2) extends beyond the flange (5), the clamping wedge (2) being frictionally held in its non-extended state in the open passage (19) of the flange (5), characterized in that the clamping wedge (2) is provided on its outer face (11) with protrusions (21) extending therebeyond which firmly abut against the open passage (19) of the flange (5) in their non-extended state, and in that - exclusive of said protrusions (21) - the outer face (11) of the clamping wedge (2) has free play (20) in respect to the open passage (19).

2. Fastening element in accordance with claim 1, characterized in that the clamping wedge (2) in its state in which it is not connected with the tie bolt (1) has a slightly larger size in comparison with the open passage (19) in the region of the protrusions (21).

3. Fastening element in accordance with claim 1, characterized in that the generatrices of the outer face (11) of the clamping wedge (2) extend parallel to each other.

4. Fastening element in accordance with claim 1, characterized in that at least two protrusions (21) are provided in the transitional areas between the contact face (12) and the outer face (11) of the clamping wedge (2).

5. Fastening element in accordance with claim 1, characterized in that only two protrusions (21) are provided.

6. Fastening element in accordance with claim 1, characterized in that the clamping wedge (2) is mirror-symmetrical to a plane of symmetry extending vertically to the contact face (12) and through the central longitudinal axis (3) and in that the protrusions (21) are disposed symmetrically in relation to said plane of symmetry.

7. Fastening element in accordance with claim 1, characterized in that the protrusions (21) are forced out of the clamping wedge (2) while adjacent recesses (22) are formed.

8. Fastening element in accordance with one of claims 1 to 7, characterized in that for the relationship of the length (l) of the clamping wedge (2) to the length (L) of the tie bolt (1) the relationship $1.1 \le l/L \le 1.3$ applies.

9. Fastening element in accordance with one of claims 1 to 8, characterized in that the play (20) forms a gap between the outer face (11) of the clamping wedge (2) and the open passage (19) of the flange (5), of which the width is greater than the lift-off of the clamping wedge (2) in the area of the flange (5) due to the displacement of the expansion face (15) on the wedge face (9).

10. Fastening element in accordance with claim 9, characterized in that the gap has a width of 0.2 to 0.4 mm.

11. Fastening element in accordance with one of the claims 1 to 10, characterized in that in the direction of the central longitudinal axis (3) the protrusions (21) have a greater length than what corresponds to the thickness of the flange (5).

12. Fastening element in accordance with one of the claims 1 to 11, characterized in that in the uninstalled state of the clamping wedge (2), the protrusions (21) have a slight excess size referred to the circumference of the open passage (19) and in that they are slightly deformed when in an installed state.

**Revendications**

1. Elément de fixation composé d'un boulon d'ancrage (1) et d'une clavette de coincement (2), un collet (5) pourvu d'un évidement de passage (19) pour la clavette de coincement (2) étant prévu à l'extrémité arrière (4) du boulon d'ancrage (1), le boulon d'ancrage (1) étant doté dans sa région avant (8) d'une face cunéiforme (9) qui, depuis soil extrémité avant (10) et en direction de l'extrémité arrière (4), est biaisée en direction de l'axe médian longitudinal (3) du boulon d'ancrage (1), et une face (6), qui se développe sensiblement parallèlement à l'axe médian longitudinal (3) et s'étend jusqu'à l'extrémité arrière (4), se raccordant à cette face cunéiforme (9), la clavette de coincement (2), à l'état non écarté, complétant le boulon d'ancrage (1) en un profil approximativement cylindrique et s'appliquant à cet effet contre la face (6), parallèle à l'axe, par une face d'application (12) et contre la face cunéiforme (9) par une face d'écartement (15), l'extrémité avant (17) de la clavette de coincement (2) n'atteignant pas l'extrémité avant (10) du bouton d'ancrage (1) et l'extrémité arrière (13) de la clavette de coincement (2) s'étendant au-delà du collet (5), et la clavette de coincement (2) étant, à t'état non écarté, maintenue par engagement de friction dans l'évidement (19) du collet (5), **caractérisé** en ce que la clavette de coincement (2) est dotée, sur sa face extérieure (11), de saillies (21) qui dépassent de cette face et qui, à l'état non écarté, s'appliquent fixement contre l'évidement (19) du collet (5), et en ce que la face extérieure (11) de la clavette de coincement (2) présente ailleurs un jeu (20) par rapport à l'évidement (19).

2. Elément de fixation selon la revendication 1, **caractérisé** en ce que la clavette de coincement (2) présente, à t'état non assemblé avec te boulon d'ancrage (1), une faible surcote par rapport à l'évidement (19) dans la région des saillies (21).

3. Elément de fixation selon la revendication 1, **caractérisé** en ce que les génératrices de la face extérieure (11) de là clavette de coincement (2) sont parallèles.

4. Elément de fixation selon ta revendication 1, **caractérisé** en ce qu'au moins deux saillies (21) sont prévues dans les régions de transition entre la face d'application (12) et la face extérieure (11) de la clavette de coincement (2).

5. Elément de fixation selon la revendication 1, **caractérisé** en ce que seules deux saillies (21) sont prévues.

6. Elément de fixation selon la revendication 1, **caractérisé** en ce que la clavette de coincement (2) est réalisée symétrique par rapport à un plan de symétrie s'étendent perpendiculairement à la face d'application (12) et passant par l'axe médian longitudinal (3), et en ce que les saillies (21) sont disposées symétriquement par rapport à ce plan de symétrie.

7. Elément de fixation selon la revendication 1, **caractérisé** en ce que les saillies (21) sont repoussées à partir de la clavette de coincement (2), en formant des évidements voisins (22).

8. Elément de fixation selon l'une des revendications 1 à 7, **caractérisé** en ce que le rapport de la longueur (l) de la clavette de coincement (2) à la longueur (L) du bouton d'ancrage (1) satisfait à la relation : $1{,}1 \leq l/L \leq 1{,}3$.

9. Etément de fixation selon l'une des revendications 1 à 8, **caractérisé** en ce que le jeu (20) constitue, entre la face extérieure (11) de la clavette de coincement (2) et l'évidement (19) du collet (5), une fente dont la largeur est supérieure au décollement de la clavette de coincement (2) dans la région du collet (5) par suite du glissement de la face d'écartement (15) sur la face cunéiforme (9).

10. Elément de fixation selon la revendication 9, **caractérisé** en ce que la fente présente une largeur de 0,2 à 0,4 mm.

11. Elément de fixation selon l'une des revendications 1 à 10, **caractérisé** en ce que les saillies (21) possèdent, dans la direction de l'axe médian longitudinal (3), une longueur légèrement supérieure à ce qui correspond à l'épaisseur du collet (5).

12. Elément de fixation selon l'une des revendications 1 à 11, **caractérisé** en ce que les saillies (21), à l'état non monté de la clavette de coincement (2), présentent une faible surcote par rapport au contour de section de l'évidement (19), et en ce qu'elles sont légèrement déformées à l'état monté.

FIG.1

FIG.2

FIG.4

FIG.3

FIG.5

# FIG. 6